# EUROPÄISCHE PATENTSCHRIFT

(11) **EP 1 370 597 B1**
(45) Veröffentlichungstag und Bekanntmachung des Hinweises auf die Patenterteilung: **26.09.2012**
(21) Anmeldenummer: 02719953.8
(22) Anmeldetag: 28.02.2002
(51) Int. Cl.: C08G 18/40, C08G 18/62, C08G 18/76

(54) **VERFAHREN ZUR HERSTELLUNG VON POLYURETHAN-WEICHSCHAUMSTOFFEN**
METHOD OF PRODUCING FLEXIBLE POLYURETHANE FOAMS
PROCEDE D'OBTENTION DE MOUSSES FLEXIBLES DE POLYURETHANNE

(30) Priorität: 05.03.2001 DE 10110553
(43) Veröffentlichungstag der Anmeldung: 17.12.2003
(73) Patentinhaber: BASF SE, 67056 Ludwigshafen (DE)
(72) Erfinder: BRUCHMANN, Bernd, 67251 Freinsheim (DE); BINDER, Horst, 68623 Lampertheim (DE); LUTTER, Heinz-Dieter, 49356 Diepholz (DE); KÜBLER, Michael, 69207 Sandhausen (DE); HOOLT, Pamela, 49459 Lembruch (DE)
(86) Internationale Anmeldenummer: PCT/EP2002/002132
(87) Internationale Veröffentlichungsnummer: WO 2002/070579

(56) Entgegenhaltungen:
- EP-A- 0 704 474
- EP-A1- 0 406 702
- WO-A-98/44028
- CH-A- 426 252
- DE-A- 1 915 681
- DE-A- 2 245 710
- US-A- 3 284 415

## Beschreibung

Die Erfindung betrifft ein Verfahren zur Herstellung von Polyurethan-Weichschaumstoffen durch Umsetzung von Polyisocyanaten mit Verbindungen mit mindestens zwei mit Isocyanatgruppen reaktiven Wasserstoffatomen.

Polyurethan-Schaumstoffe sind seit langem bekannt und vielfach in der Literatur beschrieben. Ihre Herstellung erfolgt üblicherweise durch Umsetzung von Isocyanaten mit Verbindungen mit mindestens zwei mit Isocyanatgruppen reaktiven Wasserstoffatomen. Als Isocyanate werden zumeist aromatische Di- und Polyisocyanate verwendet, wobei Isomere des Toluylendiisocyanats (TDI), Isomere des Diphenylmethandiisocyanats (MDI) sowie Mischungen aus Diphenylmethandiisocyanat und Polymethylen-polyphenylen-polyisocyanaten (Roh-MDI) die größte technische Bedeutung haben.

Bei niederdichten Polyurethan-Weichschaumstoffen, insbesondere solchen mit einer Dichte von unter 100 g/l, vorzugsweise unter 80 g/l, besonders bevorzugt im Bereich zwischen 25 und 80 g/l, ist es oft schwierig, die Härte des Schaumes in ein vom Markt gewünschtes Niveau zu bringen. Man behilft sich zur Zeit damit, daß man der Polyolkomponente polymermodifizierte Polyole zusetzt. Derartige Füllstoff enthaltende Polyole (Filler-Polyole) können beispielsweise durch in-situ Polymerisation von ethylenisch ungesättigten Monomeren, vorzugsweise Styrol und/oder Acrylnitril, in Polyetheralkoholen hergestellt werden (Graft-Polyole). Zu den polymermodifizierten Polyetheralkoholen gehören auch Polyharnstoffdispersionen enthaltende Polyetheralkohole (PHD-Polyole), die vorzugsweise durch Umsetzung von Aminen mit Isocyanaten in Polyolen hergestellt werden. Weiterhin sind die feststoffhaltigen Polyole auf Basis von Polyisocyanat-Polyaddition mit Alkanolaminen, sogenannte PIPA-Polyole, zu nennen. Eine Übersicht zu den füllstoffhaltigen Polyolen gibt das Kapitel "Rohstoffe" im Kunststoffhandbuch, Band 7, Polyurethane, herausgegeben von Günter Oertel, Carl-Hanser-Verlag, München, 3. Auflage 1993, sowie die DE 195 08 079 und die DE 197 25 020.

Diese Feststoff- bzw. Füllstoff-haltigen Polyole haben jedoch wesentliche Nachteile. Zum einen verursachen die Feststoffpartikel Probleme, da sie entweder bei Lagerung sedimentieren oder Filter der Polyolförderpumpen während der Produktion der PU-Schäume verstopfen, zum anderen sind die Polyole wenig reaktiv und erfordem spezielle Katalysatoren bei der Schaumherstellung.

US-A-3,284,415 beschreibt die Herstellung von Polyurethanen, insbesondere zelligen und geschäumten Polyurethanen, durch Umsetzung von Diisocyanaten oder Polyisocyanaten mit Verbindungen mit mindestens zwei mit Isocyanatgruppen reaktiven Wasserstoffatomen, wobei als Verbindungen mit mindestens zwei mit Isocyanatgruppen reaktiven Wasserstoffatomen Copolymere aus Ethylen und 4 bis 35 Gew.% Alkylacrylaten und / oder Hydroxyalkylacrylaten verwendet werden. Diese Ethylen-Acrylat-Copolymere werden als alleinige Polyolkomponente verwendet. Als Diisocyanate werden insbesondere aromatische Di- und Polyisocyanate, wie Toluylendiisocyanat, Phenylendiisocyanat, Diphenylmethandiisocyanat oder Diphenylmethandiisocyanat-Oligomere eingesetzt. Durch die Verwendung der Polyethylenacrylate wurden die mechanischen Eigenschaften der Polyurethane, insbesondere die Elastizität und die Schlagfestigkeit bei tiefen Temperaturen, sowie die Wasserbeständigkeit der Polyurethane verbessert.

In DE-C-22 45 710 werden bei Raumtemperatur flüssige, ethylenisch ungesättigte Vinylchlorid-Copolymerisate beschrieben, die als Flammschutzmittel in Polyurethan-Hartschäumen eingesetzt werden können. Es wird jedoch kein Einfluß der Copolymerisate auf die mechanischen Eigenschaften der Schaumstoffe erwähnt.

Aufgabe der vorliegenden Erfindung war es, Polyurethan-Schaumstoffe mit einer Dichte von unter 100 g/l bereitzustellen, die gute mechanische Eigenschaften, insbesondere Härte, Dehnung und Zugfestigkeit, aufweisen sollen, und die unter Verwendung von in der Polyurethanchemie üblichen Ausgangsstoffen hergestellt werden können, wobei auf den Einsatz von füllstoffhaltigen Polyolen verzichtet werden kann.

Die Aufgabe konnte erfindungsgemäß gelöst werden durch Herstellung von Polyurethan-Weichschaumstoffen durch Umsetzung von Di- und/oder Polyisocyanaten mit Verbindungen mit mindestens zwei mit Isocyanaten reaktiven Wasserstoffatomen, wobei die Verbindungen mit mindestens zwei mit Isocyanaten reaktiven Wasserstoffatomen mindestens ein Polyacrylatpolyol mit einem zahlenmittleren Molekulargewicht von maximal 12000 g/mol, hergestellt durch Polymerisation von hydroxyfunktionalisierten (Meth)acrylaten oder durch Copolymerisation von hydroxyfunktionalisierten (Meth)acrylaten mit nicht hydroxyfunktionellen, olefinische Doppelbindungen enthaltenden Monomeren ausgewählt aus der Gruppe, enthaltend Propen, Buten, Isobuten, Diisobuten, Acrylnitril, Acrylamid, Acrolein, Styrol, Methylstyrol, Divinylbenzol, Maleinsäureanhydrid, Vinylester von Carbonsäuren oder ungesättigten Carbonsäuren, wie zum Beispiel Maleinsäure, Fumarsäure oder Crotonsäure oder deren Derivaten und nicht hydroxylfunktionelle (Meth)acrylate enthalten.

Gegenstand der Erfindung ist demzufolge ein Verfahren zur Herstellung von Polyurethan-Weichschaumstoffen durch Umsetzung von
a) Polyisocyanaten mit
b) Verbindungen mit mindestens zwei mit Isocyanatgruppen reaktiven Wasserstoffatomen,
   dadurch gekennzeichnet, daß die Polyisocyanate a) aromatische Di- und/oder Polyisocyanate sind und die Verbindungen mit mindestens zwei mit Isocyanatgruppen reaktiven Wasserstoffatomen b) mindestens ein Acrylatpolyol mit einem zahlenmittleren Molekulargewicht von maximal 12000 g/mol, hergestellt durch Polymerisation von hydroxyfunktionalisierten (Meth)acrylaten oder durch Copolymerisation von hydroxyfunktionalisierten (Meth)acrylaten mit nicht hydroxyfunktionellen, olefinische Doppelbindungen enthaltenden Monomeren ausgewählt aus der Gruppe, enthaltend Propen, Buten, Isobuten, Diisobuten Acrylnitril, Acrylamid, Acrolein, Styrol, Methylstyrol, Divinylbenzol, Maleinsäureanhydrid, Vinylester von Carbonsäuren oder ungesättigten Carbonsäuren, wie zum Beispiel Maleinsäure, Fumarsäure oder Crotonsäure oder deren Derivaten und nicht hydroxylfunktionelle (Meth)acrylate enthalten.

Gegenstand der Erfindung sind weiterhin Polyurethanweichschaumstoffe, herstellbar durch Umsetzung von
a) Polyisocyanaten mit
b) Verbindungen mit mindestens zwei mit Isocyanatgruppen reaktiven Wasserstoffatomen,
   dadurch gekennzeichnet, daß die Polyisocyanate a) aromatische Di- und/oder Polyisocyanate sind und die Verbindungen mit mindestens zwei mit Isocyanatgruppen reaktiven Wasserstoffatomen b) mindestens ein Acrylatpolyol mit einem zahlenmittleren Molekulargewicht von maximal 12000 g/mol, hergestellt durch Polymerisation von hydroxyfunktionalisierten (Meth)acrylaten oder durch Copolymerisation von hydroxyfunktionalisierten (Meth)acrylaten mit nicht hydroxyfunktionellen, olefinische Doppelbindungen enthaltenden Monomeren ausgewählt aus der Gruppe, enthaltend Propen, Buten, Isobuten, Düsobuten, Acrylnitril, Acrylamid, Acrolein, Styrol, Methylstyrol, Divinylbenzol, Maleinsäureanhydrid, Vinylester von Carbonsäuren oder ungesättigten Carbonsäuren, wie zum Beispiel Maleinsäure, Fumarsäure oder Crotonsäure oder deren Derivaten und nicht hydroxylfunktionelle (Meth)acrylate enthalten.

Als Acrylatpolyole werden niedermolekulare Acrylatpolyole eingesetzt, das heißt solche, deren zahlenmittleres Molekulargewicht maximal 12000 g/mol, vorzugsweise maximal 8000 g/mol, besonders bevorzugt maximal 6000 g/mol und minimal 400 g/mol beträgt. Im folgenden werden die Bezeichnungen "Acrylatpolyole" und "Polyacrylatpolyole" synonym verwendet.

Die erfindungsgemäß verwendeten Acrylatpolyole werden durch Polymerisation von hydroxyfunktionalisierten (Meth)acrylaten, bevorzugt durch Copolymerisation von hydroxyfunktionalisierten (Meth)acrylaten mit nicht hydroxylfunktionellen (Meth)acrylaten hergestellt. Weiterhin können sie auch durch Copolymerisation der genannten Acrylat-Monomeren mit anderen aliphatischen oder aromatischen, ethylenisch ungesättigten Monomeren, ausgewählt aus der Gruppe, enthaltend Propen, Buten, Isobuten, Diisobuten, Acrylnitril, Acrylamid, Acrolein, Styrol, Methylstyrol, Divinylbenzol, Maleinsäureanhydrid, Vinylester von Carbonsäuren oder ungesättigten Carbonsäuren, wie zum Beispiel Maleinsäure, Fumarsäure oder Crotonsäure oder deren Derivaten, hergestellt werden.

Derartige Copolymerisationen können in kontinuierlich oder diskontinuierlich betriebenen Reaktoren, beispielsweise Kesseln, Ringspaltreaktoren, Taylorreaktoren, Extrudern oder Rohrreaktoren, durchgerührt werden.

Bevorzugt werden Reaktionsbedingungen gewählt, die zu Polymeren mit geringen Verunreinigungen führen. So wird bei der Herstellung der erfindungsgemäß verwendeten Acrylatpolyole vorzugsweise ohne die Verwendung von Polymerisationsreglem gearbeitet.

Vorzugsweise wird bei der Herstellung der erfindungsgemäß verwendeten Acrylatpolyole bei Temperaturen oberhalb 1605C in Abwesenheit von Polymerisationsreglem und mit möglichst geringen Initiatorkonzentrationen polymerisiert. Die Prozessführung wird vorzugsweise so gewählt, dass am Ende der Umsetzung Acrylatpolyole mit mittleren Molmassen (Mn) von maximal etwa 12000 g/mol vorliegen.

Bevorzugt geeignet sind Homopolymerisate aus Hydroxyalkyl(meth)- acrylaten oder Copolymerisate aus Hydroxyalkyl(meth)acrylaten mit nicht hydroxylfunktionellen (meth)acrylischen Monomeren. Insbesondere werden bei der Herstellung der erfindungsgemäß verwendeten Acrylatpolyole halogenfreie Monomere eingesetzt.

Die erfindungsgemäß verwendeten Acrylatpolyole werden insbesondere hergestellt durch Polymerisation von C1-bis C8-Hydroxyalkyl- (meth)acrylaten, wie z.B. Hydroxyethyl(meth)acrylat, Hydroxypropyl(meth)acrylat, Hydroxybutyl(meth)acrylat.

Als acrylische Monomere ohne OH-Gruppen, die gegebenenfalls als Comonomere eingesetzt werden können, kommen insbesondere aliphatische, olefinische Doppelbindungen enthaltende Monomere unterschiedlichster chemischer Struktur in Betracht, wie beispielsweise Alkene mit 2 bis 6 Kohlenstoffatomen, wie Propen, Buten, Isobuten oder Acrylnitril, Acrylamid, Acrolein, Maleinsäureanhydrid, Vinylester von Carbonsäuren oder ungesättigten Carbonsäuren, wie zum Beispiel Maleinsäure, Fumarsäure oder Crotonsäure oder deren Derivate, und besonders bevorzugt Alkyl- (meth)acrylate mit C1 bis C10 Alkylgruppen, beispielsweise n-Hexyl(meth)acrylat, Cyclohexyl(meth)acrylat, n-Butyl(meth)- acrylat, Propyl(meth)acrylat, Ethyl(meth)-acrylat, Methyl(meth)- acrylat, Ethylhexyl(meth)acrylat und/oder Hexandioldi(meth)-acrylat. Die genannten Monomere können einzeln oder in beliebigen Mischungen untereinander eingesetzt werden.

Die erfindungsgemäß verwendeten Acrylatpolyole werden vorzugsweise durch Copolymerisation von C1-bis C8-Hydroxyalkyl(meth)-acrylaten mit den oben beschriebenen nicht OH-funktionellen (meth)acrylischen Monomeren hergestellt, wobei die Kombination unterschiedlicher Hydroxyalkyl(meth)acrylate mit den nichtfunktionellen (Meth)acrylaten beliebig möglich ist. Vorzugsweise werden die OH-Gruppen enthaltenden Monomere in Konzentrationen von 5 bis 95 mol%, besonders bevorzugt von 10 bis 80 mol% eingesetzt.

In einer besonders vorteilhaften Ausführungsform der Erfindung werden die Acrylatpolyole durch Copolymerisation von C1-bis C8-Hydroxyalkyl(meth)acrylaten mit Alkyl(meth)acrylaten mit C1-bis C10 Alkylgruppen hergestellt.

Die zahlenmittleren Molmassen (Mn) der erfindungsgemäß verwendeten Acrylatpolyole liegen besonders bevorzugt bei maximal 6000 g/mol, die mittleren OH-Funktionalitäten zwischen 2 und 20 und die OH-Zahlen zwischen 100 und 500 mg KOH/g. Bei höheren Molekulargewichten und höheren Funktionalitäten sind die Acrylatpolyole zu hochviskos oder fest und lassen sich daher nur schwer in Polyurethansystemen verarbeiten. Außerdem haben die so hergestellten Polyurethane auf Grund der sehr hohen Vernetzung unzureichende mechanische Eigenschaften.

Die Polyacrylatalkohole werden vorzugsweise in einer Menge von 0.1 - 50, vorzugsweise 0.5 - 40 und besonders bevorzugt von 1 - 30 Gew.-Teilen, bezogen auf 100 Gew.-Teile der Verbindungen mit mindestens zwei mit Isocyanatgruppen reaktiven Wasserstoffatomen b) zugesetzt. Oberhalb dieser Grenzen steigt der Grad der Vernetzung drastisch an und die Weichschäume verlieren ihre typischen elastischen Eigenschaften.

Als Verbindung mit mindestens zwei aktiven Wasserstoffatomen b), die zusammen mit den erfindungsgemäß verwendeten Acrylatpolyolen eingesetzt werden können, kommen insbesondere Polyesteralkohole und vorzugsweise Polyetheralkohole mit einer mittleren Funktionalität von 2 bis 8, insbesondere von 2 bis 6, vorzugsweise von 2 bis 4 und einem mittleren Molekulargewicht im Bereich von 400 bis 10000 g/mol, vorzugsweise 1000 bis 8000 g/mol, in Betracht.

Die Polyetheralkohole können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Weichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Wenn der Gehalt an ungesättigten Bestandteilen in den Polyetheralkoholen gering sein soll, können als Katalysatoren auch Multimetallcyanidverbindungen, sogenannte DMC-Katalysatoren, eingesetzt werden.

Zur Herstellung von Weichschäumen und Integralschäumen werden insbesondere zwei- und/oder dreifunktionelle Polyetheralkohole eingesetzt.

Bevorzugt werden zur Herstellung von Weichschaumstoffen nach dem erfindungsgemäßen Verfahren zwei- und/oder dreifunktionelle Polyetheralkohole eingesetzt, die primäre Hydroxylgruppen aufweisen, insbesondere solche mit einem Ethylenoxidblock am Kettenende oder solche, die nur auf Ethylenoxid basieren.

Zu den Verbindungen mit mindestens zwei aktiven Wasserstoffatomen gehören auch die Kettenverlängerungs- und Vernetzungsmittel, die gegebenenfalls mitverwendet werden können. Als Kettenverlängerungs- und Vernetzungsmittel werden vorzugsweise 2- und 3-funktionelle Alkohole mit Molekulargewichten unter 400 g/mol, insbesondere im Bereich von 60 bis 150 g/mol, verwendet. Beispiele sind Ethylenglykol, Propylenglykol, Diethylenglykol, Butandiol-1,4, Glycerin oder Trimethylolpropan. Als Vernetzungsmittel können auch Diamine eingesetzt werden. Falls Kettenverlängerungs-und Vernetzungsmittel eingesetzt werden, beträgt deren Menge vorzugsweise bis zu 5 Gew.-%, bezogen auf das Gewicht der Verbindungen mit mindestens zwei aktiven Wasserstoffatomen.

Als Polyisocyanate können die üblichen und bekannten aromatischen Di- und Polyisocyanate eingesetzt werden. Beispiele für aromatische Di- oder Polyisocyanate sind 2,4-Toluylendiisocyanat (2,4-TDI), 2,6-Toluylendiisocyanat (2,6-TDI), 2,4'-Diphenylmethandiisocyanat (2,4'-MDI), 4,4'-Diphenylmethandiisocyanat (4,4'-MDI), Polyphenylpolymethylenpolyisocyanate, wie sie durch Kondensation von Anilin und Formaldehyd und anschliessende Phosgenierung hergestellt werden (Polymer-MDI), p-Phenylendiisocyanat, Tolidindiisocyanat, Xylylendiisocyanat oder 1,5-Naphthylendiisocyanat (NDI).

Vorzugsweise werden gemeinsam mit oder an Stelle dieser monomeren Isocyanate oder deren Gemischen daraus hergestellte Oligo- oder Polyisocyanate, sogenannte Prepolymere, insbesondere auf Basis von TDI und MDI, eingesetzt. Diese Oligo- oder Polyisocyanate lassen sich aus den genannten Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen. Vorzugsweise werden hier Urethan-, Allophanat-, Carbodiimid-, Uretonimin-, Biuret- oder Isocyanuratgruppen aufweisende Polymere aus TDI oder MDI verwendet.

Zur Durchführung des erfindungsgemäßen Verfahrens können weitere Einsatzstoffe, insbesondere Katalysatoren, Treibmittel sowie Hilfs- und/oder Zusatzstoffe mitverwendet werden, zu denen im einzelnen folgendes zu sagen ist:

Als Katalysatoren für die Herstellung der erfindungsgemäßen Polyurethan-Schaumstoffe werden die üblichen und bekannten Polyurethanbildungskatalysatoren eingesetzt, beispielsweise organische Zinnverbindungen, wie Zinndiacetat, Zinndioctoat, Dibutylzinn-dilaurat, und/oder stark basische Amine wie Diazabicyclooctan, Diazabicyclononan, Diazabicycloundecan, Triethylamin, Pentamethyldiethylentriamin, Tetramethyldiaminoethylether, Imidazole oder vorzugsweise Triethylendiamin oder Bis(N,N-Dimethylaminoethyl)ether. Die Katalysatoren werden vorzugsweise in einer Menge von 0,01 bis 10 Gew.-%, vorzugsweise 0,05 bis 5 Gew.-%, eingesetzt.

Als Treibmittel zur Herstellung der Polyurethan-Schaumstoffe wird bevorzugt Wasser eingesetzt, das mit den Isocyanatgruppen unter Freisetzung von Kohlendioxid reagiert. Gemeinsam mit oder an Stelle von Wasser können auch physikalisch wirkende Treibmittel, beispielsweise Kohlendioxid, Kohlenwasserstoffe, wie n-, iso-oder Cyclopentan, Cyclohexan oder halogenierte Kohlenwasserstoffe, wie Tetrafluorethan, Pentafluorpropan, Heptafluorpropan, Pentafluorbutan, Hexafluorbutan oder Dichlormonofluorethan, eingesetzt werden. Die Menge des physikalischen Treibmittels liegt dabei vorzugsweise im Bereich zwischen 1 bis 15 Gew.-%, insbesondere 1 bis 10 Gew.-%, die Menge an Wasser vorzugsweise im Bereich zwischen 0,5 bis 10 Gew.-%, insbesondere 1 bis 5 Gew.-%.

Als Hilfsmittel und/oder Zusatzstoffe werden beispielsweise oberflächenaktive Substanzen, Schaumstabilisatoren, Zellregler, äußere und innere Trennmittel, Füllstoffe, Flammschutzmittel, Pigmente, Hydrolyseschutzmittel sowie fungistatisch und bakteriostatisch wirkende Substanzen eingesetzt.

Bei der technischen Herstellung von Polyurethan-Schaumstoffen ist es üblich, die Verbindungen mit mindestens zwei aktiven Wasserstoffatomen b) und die weiteren Einsatzstoffe sowie Hilfs- und/oder Zusatzstoffe vor der Umsetzung zu einer sogenannten Polyolkomponente zu vereinigen.

Weitere Angaben über die verwendeten Ausgangsstoffe finden sich beispielsweise im Kunststoffhandbuch, Band 7, Polyurethane, herausgegeben von Günter Oertel, Carl-Hanser-Verlag, München, 3. Auflage 1993.

Zur Herstellung der erfindungsgemäßen Polyurethane werden die organischen Polyisocyanate a) mit den Verbindungen mit mindestens zwei aktiven Wasserstoffatomen b) sowie die genannten Treibmittel, Katalysatoren und Hilfs- und/oder Zusatzstoffe (Polyolkomponente) zur Reaktion gebracht, wobei die erfindungsgemäß verwendeten Acrylatpolyole vorzugsweise der Polyolkomponente zugesetzt werden.

Bei der Herstellung der erfindungsgemäßen Polyurethane werden Isocyanat- und Polyolkomponente in einer solchen Menge zusammengebracht, daß das Äquivalenzverhältnis von Isocyanatgruppen zur Summe der aktiven Wasserstoffatome 0,6 : 1 bis 1 : 1,4, vorzugsweise 0,7 : 1 bis 1 :1,2 beträgt.

Die Herstellung der Polyurethan-Schaumstoffe erfolgt vorzugsweise nach dem one-shot-Verfahren, beispielsweise mit Hilfe der Hochdruck- oder Niederdrucktechnik. Die Schaumstoffe können in offenen oder geschlossenen metallischen Formwerkzeugen oder durch das kontinuierliche Auftragen des Reaktionsgemisches auf Bandstraßen zur Erzeugung von Schaumblöcken hergestellt werden.

Besonders vorteilhaft ist es, nach dem sogenannten Zweikomponentenverfahren zu arbeiten, bei dem, wie oben ausgeführt, eine Polyol- und eine Isocyanatkomponente hergestellt und verschäumt werden. Die Komponenten werden vorzugsweise bei einer Temperatur im Bereich zwischen 15 bis 120°C, vorzugsweise 20 bis 80°C vermischt und in das Formwerkzeug beziehungsweise auf die Bandstraße gebracht. Die Temperatur im Formwerkzeug liegt zumeist im Bereich zwischen 15 und 120°C, vorzugsweise zwischen 30 und 80°C. Werden Acrylatpolyole mit einer Viskosität oberhalb 10000 mPas, gemessen bei 23°C, eingesetzt, ist es vorteilhaft, das Acrylat mit einer niederviskoseren OH-Komponente der Polyolmischung bei etwa 50°C vorzuverdünnen und erst dann der Polyolmischung zuzusetzen.

Die erfindungsgemäß eingesetzten Acrylatpolyole erlauben die Herstellung von elastischen und viskoelastischen Weichschaumstoffen mit Raumgewichten unter 100 g/l und hervorragenden mechanischen Eigenschaften, z.B. einer sehr guten Dehnung, Zugfestigkeit und Härte ohne auf den Einsatz von Filler-Polyolen, die die oben genannten Nachteile besitzen, angewiesen zu sein.

Die Erfindung soll an nachstehenden Beispielen näher erläutert werden.

In Tabelle 1 sind Beispiele für Polyacrylatpolyole dargestellt, die zur Herstellung der erfindungsgemäßem Schaumstoffe eingesetzt werden können.

**Tabelle 1: Beispiele für Polyacrylatpolyole**

| Polyacrylat Nr. | Zusammensetzung Monomere (Mol-%) | Zahlenmittlere Mol-masse (g/mol) | Polydispersität (M_{w}/Mₙ) | OH-Zahl (mg KOH/g) |
|---|---|---|---|---|
| 1 | HEMA / BA | 1719 | 1,63 | 299 |
| | 75 : 25 | | | |
| 2 | HEA / BA | 1889 | 4,79 | 121 |
| | 25 : 75 | | | |
| 3 | HEA / BA | 1751 | 2,15 | 241 |
| | 50 : 50 | | | |
| 4 | HEA / BA | 2160 | 2,22 | 241 |
| | 50 : 50 | | | |
| 5 | HEA / BA / HDDA | 1476 | 4,46 | 241 |
| | 50 : 47 : 3 | | | |
| 6 | HEA / EHA / HDDA | 1289 | 2,52 | 241 |
| | 50 : 47 : 3 | | | |

| | | | | |
|---|---|---|---|---|
| HEMA: 2-Hydroxyethylmethacrylat BA: n-Butylacrylat HEA: 2-Hydroxyethylacrylat HDDA: Hexandioldiacrylat EHA: 2-Ethylhexylacrylat | | | | |

Aus den in den Tabellen 2 und 3 in Gewichtsteilen angegebenen Verbindungen wurden zunächst die Polyolkomponenten hergestellt. Diese Polyolkomponenten und die ebenfalls in den Tabellen 2 und 3 in Gewichtsteilen angegebenen Mengen der Isocyanatkomponente wurden zusammengegeben, mit einem Rührer homogenisiert und in eine auf 60°C erwärmte, nach oben offene Form mit den Abmessungen 40 x 40 x 40 cm gegeben. Die entstandenen Schaumstoffe wurden bei Raumtemperatur (23°C) über 24 h ausgehärtet und anschliessend vermessen.

**Tabelle 2: Beispiele für den Einsatz von Acrylatpolyolen in hochelastischen MDI-Schaumstoff-Formulierungen**

| Beispiel | 1 (Vergleich) | 2 | 3 | 4 | 5 | 6 | 7 |
|---|---|---|---|---|---|---|---|
| Polyol-Komponente | | | | | | | |
| Lupranol^{®} 2091 | 96 | 96 | 96 | 96 | 96 | 96 | 96 |
| Lupranol^{®} 2047 | 4 | 4 | 4 | 4 | 4 | 4 | 4 |
| Polyacrylat Nr. 2 (Tab: 1) | | 5 | 10 | 15 | | | |
| Polyacrylat Nr. 4 (Tab. 1) | | | | | 5 | 10 | 15 |
| Texacat ZF 24 | 0,4 | 0,4 | 0,4 | 0,4 | 0,4 | 0,4 | 0,4 |
| Diethanolamin 100 % | 0,24 | 0,2 4 | 0,2 4 | 0,2 4 | 0,2 4 | 0,2 4 | 0,2 4 |
| DBTL | 0,08 | 0,0 8 | 0,0 8 | 0,0 8 | 0,0 8 | 0,0 8 | 0,0 8 |
| Tegostab^{®} B 8728 | 0,1 | 0,1 | 0,1 | 0,1 | 0,1 | 0,1 | 0,1 |
| Wasser | 2,6 | 2,6 | 2,6 | 2,6 | 2,6 | 2,6 | 2,6 |
| Isocyanat-Komponente | | | | | | | |
| Lupranat^{®} VP 9288 | 54,2 | 55, 8 | 57, 5 | 59, 1 | 57, 5 | 60, 8 | 64, 1 |
| | | | | | | | |
| Index | 97 | 97 | 97 | 97 | 97 | 97 | 97 |
| | | | | | | | |
| Dichte (kg/m³) nach DIN EN ISO 845 | 49,4 | 52, 5 | 55, 4 | 57, 5 | 53, 1 | 56, 2 | 64, 8 |
| Zugfestigkeit (kPa) (nach DIN 53571) | 57 | 69 | 74 | 81 | 72 | 86 | 101 |
| Dehnung (%) (nach DIN 53571) | 98 | 98 | 98 | 99 | 86 | 91 | 81 |
| Stauchhärte (kPa) bei 40% (nach DIN EN ISO 3386) | 3,7 | 4,4 | 4,7 | 5,4 | 5,2 | 6,6 | 9,5 |

Im Vergleich zu dem Standard-System (Beispiel 1) verbessert die Zugabe von Acrylatpolyolen deutlich die Zugfestigkeit und die Stauchhärte der Schaumstoffe.

**Tabelle 3: Beispiele für den Einsatz von Acrylatpolyolen in TDI-Schaumstoff-Formulierungen**

| Beispiel | 8 (Vergleich) | 9 | 10 | 11 | 12 | 13 | 14 | 15 | 16 |
|---|---|---|---|---|---|---|---|---|---|
| Polyol-Komponente | | | | | | | | | |
| Lupranol^{®} 4700 | 25 | | | | | | | | |
| Lupranol^{®} 2080 | 75 | 100 | 100 | 100 | 100 | 100 | 100 | 90 | 100 |
| Lupranol^{®} 2047 | | | | | | | | 10 | |
| Polyacrylat Nr. 2 (Tab. 1) | | 5 | 10 | 15 | 20 | | | | |
| Polyacrylat Nr. 4 (Tab. 1) | | | | | | 5 | 10 | 15 | 20 |
| Lupragen N 201 | 0,1 | 0,1 | 0,1 | | | 0,1 | | | 0,3 |
| Lupragen N 206 | 0,04 | 0,04 | 0,04 | 0,15 | 0,15 | 0,04 | 0,15 | 0,15 | 0,15 |
| Tegostab^{®} B 4900 | 0,95 | 0,95 | 0,95 | 0,95 | 0,5 | 0,95 | 0,5 | 0,5 0 | 0,5 |
| Kosmos 29 | 0,24 | 0,2 4 | 0,1 | 0,1 | 0,0 5 | 0,2 | 0,0 2 | 0,0 5 | |
| Wasser | 2,9 | 2,9 | 2,9 | 2,9 | 2,9 | 2,9 | 2,9 | 2,9 | 2,9 |
| Isocyanat-Komponente | | | | | | | | | |
| Lupranat^{®} T 80 A | 39,8 | 42,0 | 43,1 | 44,1 | 45,2 | 43,1 | 45,2 | 47,2 | 49,8 |
| | | | | | | | | | |
| Index | 115 | 115 | 115 | 115 | 115 | 115 | 115 | 115 | 115 |
| | | | | | | | | | |
| Dichte (kg/m³) nach DIN EN ISO 845 | 32,5 | 32,6 | 35,5 | 34,6 | 39,0 | 36,4 | 36,0 | 34,5 | 34,3 |
| Zugfestigkeit (kPa) (nach DIN 53571) | 79 | 79 | 79 | 77 | 84 | 85 | 86 | 92 | 69 |
| Dehnung (%) (nach DIN 53571) | 100 | 117 | 117 | 116 | 117 | 112 | 111 | 91 | 69 |
| Stauchhärte (kPa) bei 40% (nach DIN EN ISO 3386) | 5,6 | 4,8 | 4,5 | 4,4 | 4,7 | 5,6 | 4,8 | 5,3 | 6,2 |

Im Vergleich zu einem mit Filler-Polyol formulierten Standardsystem (Beispiel 8) werden bei den erfindungsgsmäßen Schaumstoffen bei vergleichbaren Dichten verbesserte Zugfestigkeiten und Dehnungen erhalten. Die Stauchhärte der Schäume bewegt sich dabei auf vergleichbar hohem Niveau.

Definition der Einsatzstoffe:
- Lupranol^{®} 2091:: Polyoxypropylen-polyoxyethylentriol, Hydroxylzahl 28 mg KOH/g
- Lupranol^{®} 2047:: Polyoxypropylen-polyoxyethylentriol, Hydroxylzahl 42 mg KOH/g
- Lupranol^{®} 2080:: Polyoxypropylen-polyoxyethylentriol, Hydroxylzahl 48 mg KOH/g
- Lupranol^{®} 4700:: Graft-Polyetherpolyol, Basis Acrylnitril/Styrol, Hydroxylzahl 29 mg KOH/g, Feststoffgehalt: 40 %, Viskosität 5000 mPas (25 °C)
- Lupranat^{®} T 80:: Toluylendiisocyanat, Isomerengemisch, NCO-Gehalt = 48 Gew.%
- Lupranat^{®} VP 9288:: Modifiziertes MDI-Polyisocyanat, NCO-Gehalt = 28 Gew.-%, Viskosität 70 mPas (25°C)
- Lupragen^{®} N 201:: Diazabicyclooctan, 33%ig in Dipropylenglykol
- Lupragen^{®} N 206:: Bis(N,N-Dimethylaminoethyl)ether, 70%ig in Dipropylenglykol
- Tegostab^{®} B 8728:: Stabilisator, Th. Goldschmidt
- Tegostab^{®} B 4900:: Silikonstabilisator, Th. Goldschmidt
- Kosmos^{®} 29:: Zinn(II)-octoat, Th. Goldschmidt.
- Texacat^{®} ZF 24:: Bis(N,N-dimethylaminoethyl)ether, 23%ig in Dipropylen-glykol, Texaco
- DBTL:: Dibutylzinn-dilaurat.

## Patentansprüche

1. Verfahren zur Herstellung von Polyurethan-Weichschaumstoffen mit einer Dichte von unter 100 g/l, durch Umsetzung von
a) Polyisocyanaten mit
b) Verbindungen mit mindestens zwei mit Isocyanatgruppen reaktiven Wasserstoffatomen,
**dadurch gekennzeichnet, daß** die Polyisocyanate a) aromatische Di- oder Polyisocyanate sind und die Verbindungen mit mindestens zwei mit Isocyanatgruppen reaktiven Wasserstoffatomen b) mindestens ein Acrylatpolyol, mit einem zahlenmittleren Molekulargewicht von maximal 12000 g/mol, hergestellt durch Polymerisation von hydroxyfunktionalisierten (Meth)acrylaten oder durch Copolymerisation von hydroxyfunktionalisierten (Meth)acrylaten mit nicht hydroxyfunktionellen, olefinische Doppelbindungen enthaltenden Monomeren ausgewählt aus der Gruppe, enthaltend Propen, Buten, Isobuten, Diisobuten, Acrylnitril, Acrylamid, Acrolein, Styrol, Methylstyrol, Divinylbenzol, Maleinsäureanhydrid, Vinylester von Carbonsäuren oder ungesättigten Carbonsäuren, wie zum Beispiel Maleinsäure, Fumarsäure oder Crotonsäure oder deren Derivaten und nicht hydroxylfunktionelle (Meth)acrylate, enthalten.

2. Verfahren nach Anspruch 1, **dadurch gekennzeichnet, daß** die Acrylatpolyole ein mittleres Molekulargewicht Mn von maximal 8000 g/mol aufweisen.

3. Verfahren nach Anspruch 1, **dadurch gekennzeichnet**, das die Acrylatpolyole ein mittleres Molekulargewicht Mn von maximal 6000 g/mol aufweisen.

4. Verfahren nach Anspruch 1, **dadurch gekennzeichnet, daß** die Acrylatpolyole durch Polymerisation von C1-bis C8-Hydroxyalkyl(meth)acrylaten hergestellt werden.

5. Verfahren nach Anspruch 1, **dadurch gekennzeichnet, daß** die Acrylatpolyole durch Copolymerisation von C1-bis C8-Hydroxyalkyl(meth)acrylaten mit Alkyl(meth)acrylaten mit C1 bis C10 Alkylgruppen hergestellt werden.

6. Verfahren nach Anspruch 1, **dadurch gekennzeichnet, daß** die Verbindungen mit mindestens zwei mit Isocyanatgruppen reaktiven Wasserstoffatomen b) mindestens ein Acrylatpolyol und mindestens einen Polyetheralkohol oder Polyesteralkohol enthalten.

7. Verfahren nach Anspruch 1, **dadurch gekennzeichnet, daß** Acrylatpolyole in einer Menge von 0.1 - 50 Gew.-Teilen, bezogen auf 100 Gew.-Teile der Verbindungen mit mindestens zwei mit Isocyanatgruppen reaktiven Wasserstoffatomen b), eingesetzt werden.

8. Verfahren nach Anspruch 1, **dadurch gekennzeichnet, daß** Acrylatpolyole in einer Menge von 0.5 - 40 Gew.-Teilen, bezogen auf 100 Gew.-Teile der Verbindungen mit mindestens zwei mit Isocyanatgruppen reaktiven Wasserstoffatomen b), eingesetzt werden.

9. Verfahren nach Anspruch 1, **dadurch gekennzeichnet, daß** die Acrylatpolyole in einer Menge von 1 - 30 Gew-Teilen, bezogen auf 100 Gew.-Teile der Verbindungen mit mindestens zwei mit Isocyanatgruppen reaktiven Wasserstoffatomen b), eingesetzt werden.

10. Verfahren nach Anspruch 1, **dadurch gekennzeichnet, daß** als Polyisocyanate a) Toluylendiisocyanat, Diphenylmethandiisocyanat, Polyphenylpolymethylenpolyisocyanat, Phenylendiisocyanat, Xylylendiisocyanat, Naphthylendiisocyanat, Tolidindiisocyanat, oder Gemische der genannten Isocyanate eingesetzt werden.

11. Verfahren nach Anspruch 1, **dadurch gekennzeichnet, daß** die Polyisocyanate a) durch Einbau von Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen modifiziert wurden.

12. Verfahren nach Anspruch 1, **dadurch gekennzeichnet, daß** die Polyisocyanate a) durch Einbau von Urethan-, Allophanat-, Uretdion-, Carbodiimid-, Uretonimin-, Biuret- oder Isocyanurat-Strukturen modifiziert wurden.

13. Polyurethan-Schaumstoff, herstellbar nach einem der Ansprüche 1 bis 12.

## Claims

1. A process for the preparation of flexible polyurethane foams having a density of less than 100 g/l, by reacting
a) polyisocyanates with
b) compounds having at least two hydrogen atoms reactive with isocyanate groups,
wherein the polyisocyanates a) are aromatic di- or polyisocyanates and the compounds b) having at least two hydrogen atoms reactive with isocyanate groups comprise at least one acrylate polyol having a number-average molecular weight of not more than 12 000 g/mol and prepared by polymerization of hydroxyl-functionalized (meth)acrylates or by copolymerization of hydroxyl-functionalized (meth)acrylates with monomers having no hydroxyl functional groups, comprising olefinic double bonds and selected from the group comprising propene, butene, isobutene, diisobutene, acrylonitrile, acrylamide, acrolein, styrene, methylstyrene, divinylbenzene, maleic anhydride, vinyl esters of carboxylic acids or unsaturated carboxylic acids, for example maleic acid, fumaric acid or crotonic acid, or derivatives thereof and (meth)acrylates having no hydroxyl functional groups.

2. The process according to claim 1, wherein the acrylate polyols have an average molecular weight Mₙ of not more than 8 000 g/mol.

3. The process according to claim 1, wherein the acrylate polyols have an average molecular weight Mₙ of not more than 6 000 g/mol.

4. The process according to claim 1, wherein the acrylate polyols are prepared by polymerization of hydroxy-C1- to C8-alkyl (meth)acrylates.

5. The process according to claim 1, wherein the acrylate polyols are prepared by copolymerization of hydroxy-C1- to C8-alkyl (meth)acrylates with alkyl (meth)acrylates having C1 to C10 alkyl groups.

6. The process according to claim 1, wherein the compounds b) having at least two hydrogen atoms reactive with isocyanate groups comprise at least one acrylate polyol and at least one polyether alcohol or polyester alcohol.

7. The process according to claim 1, wherein acrylate polyols are used in an amount of 0.1 - 50 parts by weight, based on 100 parts by weight of the compounds b) having at least two hydrogen atoms reactive with isocyanate groups.

8. The process according to claim 1, wherein acrylate polyols are used in an amount of 0.5 - 40 parts by weight, based on 100 parts by weight of the compounds b) having at least two hydrogen atoms reactive with isocyanate groups.

9. The process according to claim 1, wherein acrylate polyols are used in an amount of 1 - 30 parts by weight, based on 100 parts by weight of the compounds b) having at least two hydrogen atoms reactive with isocyanate groups.

10. The process according to claim 1, wherein the polyisocyanates a) used are tolylene diisocyanate, diphenylmethane diisocyanate, polyphenylpolymethylene polyisocyanate, phenylene diisocyanate, xylylene diisocyanate, naphthylene diisocyanate, tolidine diisocyanate or mixtures of said isocyanates.

11. The process according to claim 1, wherein the polyisocyanates a) were modified by incorporation of urethane, allophanate, urea, biuret, uretdione, amido, isocyanurate, carbodiimide, uretonimine, oxadiazinetrione or iminooxadiazinedione structures.

12. The process according to claim 1, wherein the polyisocyanates a) were modified by incorporation of urethane, allophanate, uretdione, carbodiimide, uretonimine, biuret or isocyanurate structures.

13. A polyurethane foam which can be prepared according to any one of claims 1 to 12.

## Revendications

1. Procédé pour la production de mousses flexibles de polyuréthane ayant une densité inférieure à 100 g/l, par mise en réaction
a) de polyisocyanates avec
b) des composés comportant au moins deux atomes d'hydrogène réactifs avec des groupes isocyanate,
**caractérisé en ce que** les polyisocyanates a) sont des di- ou polyisocyanates aromatiques et les composés b) comportant au moins deux atomes d'hydrogène réactifs avec des groupes isocyanate contiennent au moins un acrylate-polyol, ayant une masse moléculaire moyenne en nombre d'au maximum 12 000 g/mole, préparé par polymérisation de (méth)acrylates à fonctionnalisation hydroxy ou par copolymérisation de (méth)acrylates à fonctionnalisation hydroxy avec des monomères non à fonctionnalité hydroxy, comportant des doubles liaisons oléfiniques, choisis dans le groupe contenant le propène, le butène, l'isobutène, le diisobutène, l'acrylonitrile, l'acrylamide, l'acroléine, le styrène, le méthylstyrène, le divinylbenzène, l'anhydride maléique, des esters vinyliques d'acides carboxyliques ou des acides carboxyliques insaturés, comme par exemple l'acide maléique, l'acide fumarique ou l'acide crotonique ou leurs dérivés et des (méth)acrylates non à fonctionnalité hydroxy.

2. Procédé selon la revendication 1, **caractérisé en ce que** les acrylate-polyols présentent une masse moléculaire moyenne Mn d'au maximum 8 000 g/mole.

3. Procédé selon la revendication 1, **caractérisé en ce que** les acrylate-polyols présentent une masse moléculaire moyenne Mn d'au maximum 6 000 g/mole.

4. Procédé selon la revendication 1, **caractérisé en ce que** les acrylate-polyols sont préparés par polymérisation de (méth)acrylates d'hydroxyalkyle en C₁-C₈.

5. Procédé selon la revendication 1, **caractérisé en ce que** les acrylate-polyols sont préparés par copolymérisation de (méth)acrylates d'hydroxyalkyle en C₁-C₈ avec des (méth)acrylates d'alkyle à groupes alkyle en C₁-C₁₀.

6. Procédé selon la revendication 1, **caractérisé en ce que** les composés b) comportant au moins deux atomes d'hydrogène réactifs avec des groupes isocyanate contiennent au moins un acrylate-polyol et au moins un polyétheralcool ou polyesteralcool.

7. Procédé selon la revendication 1, **caractérisé en ce qu'**on utilise les acrylate-polyols en une quantité de 0,1 - 50 parties en poids, par rapport à 100 parties en poids des composés b) comportant au moins deux atomes d'hydrogène réactifs avec des groupes isocyanate.

8. Procédé selon la revendication 1, **caractérisé en ce qu'**on utilise les acrylate-polyols en une quantité de 0,5 - 40 parties en poids, par rapport à 100 parties en poids des composés b) comportant au moins deux atomes d'hydrogène réactifs avec des groupes isocyanate.

9. Procédé selon la revendication 1, **caractérisé en ce qu'**on utilise les acrylate-polyols en une quantité de 1 - 30 parties en poids, par rapport à 100 parties en poids des composés b) comportant au moins deux atomes d'hydrogène réactifs avec des groupes isocyanate.

10. Procédé selon la revendication 1, **caractérisé en ce qu'**on utilise comme polyisocyanates a) le toluylène-diisocyanate, le diphénylméthane-diisocyanate, le polyphénylpolyméthylène-polyisocyanate, le phénylène-diisocyanate, le xylylène-diisocyanate, le naphtylène-diisocyanate, le tolidine-diisocyanate ou des mélanges des isocyanates nommés.

11. Procédé selon la revendication 1, **caractérisé en ce que** les polyisocyanates a) ont été modifiés par incorporation de structures uréthane, allophanate, urée, biuret, urétdione, amide, isocyanurate, carbodiimide, urétonimine, oxadiazinetrione ou iminooxadiazinedione.

12. Procédé selon la revendication 1, **caractérisé en ce que** les polyisocyanates a) ont été modifiés par incorporation de structures uréthane, allophanate, urétdione, carbodiimide, urétonimine, biuret ou isocyanurate.

13. Mousse de polyuréthane, pouvant être produite selon l'une quelconque des revendications 1 à 12.
